# EUROPEAN PATENT SPECIFICATION

(11) **EP 3 046 349 B1**
(45) Date of publication and mention of the grant of the patent: **13.09.2017**
(21) Application number: 16151320.5
(22) Date of filing: 14.01.2016
(51) Int. Cl.: G08B 25/10, H04W 4/02, H04L 12/28, G08B 13/08, H04L 29/08, H04W 4/04, H04W 4/12

(54) **METHOD AND DEVICE FOR SENDING A MESSAGE**
VERFAHREN UND VORRICHTUNG ZUM SENDEN EINER NACHRICHT
PROCÉDÉ ET DISPOSITIF POUR L'ENVOI D'UN MESSAGE

(30) Priority: 15.01.2015 CN 201510020652; 28.01.2015 CN 201510042057
(43) Date of publication of application: 20.07.2016
(73) Proprietor: Xiaomi Inc., Beijing 100085 (CN)
(72) Inventor: FU, Qiang, 100085 Beijing (CN); WANG, Yang, 100085 Beijing (CN); CHEN, Ting, 100085 Beining (CN)
(74) Representative: Sackin, Robert

(56) References cited:
- US-A1- 2014 266 669
- US-A1- 2014 266 698
- US-A1- 2014 266 710

## Description

### TECHNICAL FIELD

The present disclosure generally relates to the field of computer technology, and more particularly, to a method and a device for sending a message.

### BACKGROUND

If a user leaves his residence with a door or a window open, criminals might break into his residence through the open door or window and cause serious damage. Accordingly, it is desirable if the state of the door and window could be acquired after the user has left his residence and it would be possible to prompt the user when the door or the window is opened.

A method for sending a message in the related art includes: installing a sensor in advance on the door and the window; and setting a leaving time period when the user will leave the residence; a server detecting that whether the door or the window is opened during the leaving time period; and if the door or the window is opened during the leaving time period, sending a prompt message to a terminal of the user.

US patent application with publication No. US2014/0206669 discloses a smart entry detector for detecting when a window or door is opened, broken or other-wise breached.

US patent application with publication No. US 2014/0266710 discloses a system for determining when a user's device has left a secured location, such as a home or office, without predefined site security settings being met, and responsively inform the user of any security anomalies.

US patent application with publication No. US 2014/0266698 discloses a system for monitoring the proximity of a personal item.

### SUMMARY

In order to solve the problem that the user might leave the residence during a time other than the leaving time period and cause inaccuracy in prompting, the present disclosure provides a method and a device for sending a message.

Aspects of the present invention are defined by the independent claims below to which reference should now be made. Optional features are defined by the dependent claims.

The technical scheme according to embodiments of the present disclosure may have the following beneficial effects:
it is detected whether a user is located in a target place; if the user is not located in the target place, it is detected whether a door or a window of the target place is opened; and if a door or a window of the target place is opened, a prompt message is sent to a device carried by the user. Thereby, it can detect whether the user is located in the target place directly rather than detect based on the leaving time period. Thus, it can solve the problem that the user might leave the residence during a time other than the leaving time period and cause inaccuracy in prompting. Therefore, it can achieve an effect of accurate prompting.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for sending a message according to an exemplary embodiment.
Fig. 2A is a flow chart showing a method for sending a message according to another exemplary embodiment.
Fig. 2B is a schematic diagram illustrating a second device list according to another exemplary embodiment.
Fig. 2C is a schematic diagram illustrating a travel log according to another exemplary embodiment.
Fig. 2D is a schematic diagram illustrating a prompt message according to another exemplary embodiment.
Fig. 3 is a block diagram of a device for sending a message according to an exemplary embodiment.
Fig. 4 is a block diagram of a device for sending a message according to an exemplary embodiment.
Fig. 5 is a block diagram of a device for sending a message according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

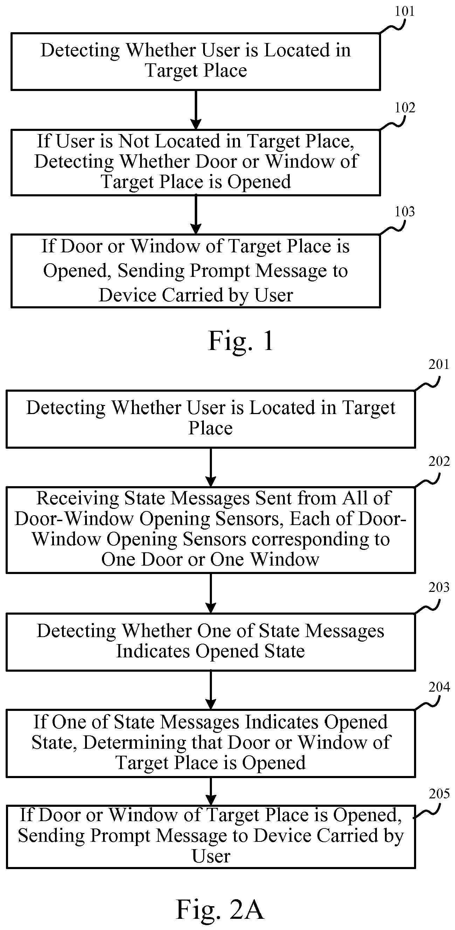

Fig. 1 is a flow chart of a method for sending a message according to an exemplary embodiment, which is applied in a server. As shown in Fig. 1, the method for sending a message includes the following steps.

In step 101, it is detected whether a user is located in a target place.

In step 102, if the user is not located in the target place, it is detected whether a door or a window of the target place is opened.

In step 103, if a door or a window of the target place is opened, a prompt message is sent to a device carried by the user.

Accordingly, in the method for sending a message provided by the present disclosure, it is detected whether a user is located in a target place; if the user is not located in the target place, it is detected whether a door or a window of the target place is opened; and if a door or a window of the target place is opened, a prompt message is sent to a device carried by the user. Thereby, it can detect whether the user is located in the target place directly rather than detect based on the leaving time period. Thus, it can solve the problem that the user might leave the residence during a time other than the leaving time period and cause inaccuracy in prompting. Therefore, it can achieve an effect of accurate prompting.

Fig. 2A is a flow chart of a method for sending a message according to another exemplary embodiment, which is applied in a server. As shown in Fig. 2A, the method for sending a message includes the following steps.

In step 201, it is detected whether a user is located in a target place.

The target place is a place to be monitored, which can be a residence of the user, a company building where the user is located. Wherein, the target place can be one place, or can also be more than one place. The number of the target place is not limited in the present embodiment.

When the user is located in the target place, criminals generally won't break into the target place to steal property. In this case, the target place has a high level of security and does not require monitoring. When the user is not located in the target place, criminals might break into the target place to steal property. In this case, the target place has a low level of security and requires monitoring. Accordingly, in the present embodiment, it can be determined whether the target place requires monitoring by detecting whether the user is located in the target place.

The present embodiment provides two manners for detecting whether the user is located in the target place, described as follows.

In a first detecting manner, a first message sent from a device in the target place is received, and it is detected whether the user is located in the target place based on the first message.

Wherein, the device in the target place can be an infrared sensor, a smart camera, a smart TV, a smart router, a smart lamp or the like which is mounted in the target place. The first message is a message acquired by the device in the target place for describing the target place.

In the present embodiment, the detection process will be described in which the first message is a person-movement-indicating message or a monitoring message, for example. Then, detecting whether the user is located in the target place based on the first message includes:
1) when the first message is a person-movement-indicating message, detecting whether a person is moving in the target place during a preset time period based on the person-movement-indicating message;
2) when the first message is a monitoring message obtained from monitoring of the target place, detecting whether the user has left the target place based on the monitoring message.

For the above point 1), the person-movement-indicating message can be used to indicate that there is a person moving, or can also be used to indicate that there is no person moving. In the present embodiment, the person-movement-indicating message indicates that there is no person moving, for example.

When the first message is a person-movement-indicating message, the device for acquiring the first message can be an infrared sensor. Wherein, the technology of the infrared sensor monitoring movement of a person is well known, which will not be elaborated herein.

In order to avoid the situation where the user is currently located in the target place while moving in an area out of the monitoring range of the infrared sensor, causing inaccuracy in generating the person-movement-indicating message, in the present embodiment, a preset time period can be set in advance, and the infrared sensor can monitor the movement of a person during the preset time period. Wherein, the starting moment of the preset time period can be a moment when it starts to sense no person movement. The preset time period can be set in default, by the user or by the server, and can be 1 hour, 2 hours, and so on. For example, assuming the infrared sensor starts to sense no person movement at 3 o'clock, and it lasts for 2 hours, then the determined preset time period is 3 o'clock to 5 o'clock.

In one possible implementation, when the infrared sensor monitors that there is no person movement for a preset time period, a person-movement-indicating message is generated and sent to the server. The server determines that the user is not located in the target place based on the person-movement-indicating message. In another possible implementation, the infrared sensor sends a person-movement-indicating message to the server at a preset time interval. When the server determines that all the person-movement-indicating messages received during the preset time period indicate no person movement, the server determines that the user is not located in the target place.

For the above point 2), the monitoring message can be used to indicate the behavior of the user in the target place. For example, when the monitoring message is a video and the device for acquiring the first message is a smart camera, the monitoring message can be used to indicate whether the user goes out of the target place, or can be used to indicate the user enters the target place. When the monitoring message is a message indicating usage of a smart domestic appliance, the device for acquiring the first message can be a smart TV or the like, and the monitoring message can be used to indicate the behavior of the user in the target place.

After it receives the monitoring message sent from the device in the target place, the server analyzes the monitoring message and determines whether the user is located in the target place. For example, when the monitoring message indicates that the user goes out of the target place, it can be determined that the user is not located in the target place. When the monitoring message indicates that the user enters the target place, it can be determined that the user is located in the target place. When the monitoring message indicates that the user is turning on the smart TV, it can be determined that the user is located in the target place.

In the second detecting manner, a second message sent from the device carried by the user is received, and it is detected whether the user is located in the target place based on the second message and a pre-stored message corresponding to the target place, the second message indicating a location of the user and the pre-stored message indicating a location of the target place.

Since the second message indicates the location of the user, and the pre-stored message indicates the location of the target place, the server can determine whether the user is located in the target place depending on whether the two locations are identical.

Wherein, detecting whether the user is located in the target place based on the second message and a pre-stored message corresponding to the target place, includes:
1) when the second message is a first device list and the pre-stored message is a second device list, detecting whether the user is located in the target place based on similarity between the first device list and the second device list, the first device list being a list of devices which are connected in a first network covering a place where the user is currently located, and the second device list being a list of devices which are connected in a second network covering the target place;
2) when the second message is a first location message of a wearable device of the user and the pre-stored message is a second location message of the target place, detecting whether the user is located in the target place based on the first location message and the second location message.

For the above point 1), assuming that the user is currently located in a current place, the server is to detect whether the current place is the target place. In one possible implementation, the server detects whether the first network covering the current place and the second network covering the target place are identical. If the first network is identical to the second network, it can be determined that the current place is the target place and the user is located in the target place. If the first network is different from the second network, it can be determined that the current place is not the target place and the user is not located in the target place. Wherein, the first network and the second network are networks of the same type such as wireless local area networks, such as Wi-Fi (registered trade mark) networks.

Detecting whether the first network is identical to the second network can be performed by detecting whether the name of the first network is identical to the name of the second network. In this case, if the first network is different from the second network while has an identical name, the server will determine that the first network is identical to the second network, causing an error. Accordingly, after it is determined that the name of the first network is identical to that of the second network, detecting whether the first network is identical to the second network can be further based on the first device list of the first network and the second device list of the second device list. Wherein, the first device list is a list of devices which are connected in the first network, and the second device list is a list of devices which are connected in the second network.

Assuming that the first network is the network in the user's residence, then the first device list can include device information of an infrared sensor, a smart camera and a smart TV. Assuming that the second network is the network in the user's company, then the second device can contain device information of a computer, a smart printer, a smart water dispenser.

Since the user may occasionally replace a device in a place, or the user does not turn on some of the devices in the place, the device list even of the same place can be different. Accordingly, in order to improve the accuracy in detection, the server can detect the similarity between the first device list and the second device list. If the similarity is larger than a preset degree, it can be determined that the first network is identical to the second network, the current place is the target place and the user is located in the target place. If the similarity is smaller than a preset degree, it can be determined that the first network is different from the second network, the current place is not the target place and the user is not located in the target place. Wherein, the preset degree can be set in default, by the user or by the server.

Wherein, if the similarity between the first device list and the second device list is a number of devices that appear in both of the lists, the preset degree can be 1, 5 or any number. If the similarity between the first device list and the second device list is a ratio of a number of devices that appear in both of the lists to a total number of the devices in both lists, the preset degree can be 10%, 20% or any ratio.

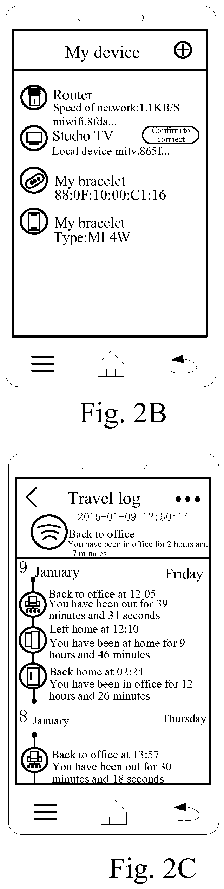

Optionally, the second device list can be pre-stored in the server. In implementation, a terminal can display options of places after it is connected to the second network. After the user selects an option of "home", the terminal scans for devices being connected to the second network, records information of the devices in the second device list, and sends the second device list to the server. Fig. 2B is a schematic diagram illustrating a second device list. As shown in Fig. 2B, the second device list includes a router, a studio TV, my bracelet and my mobile phone. The second device list also includes the description information, such as the identification of each device and the like.

However, the user can also configure a third device list of a third network covering the company. In this case, the terminal can generate a travel log of the user according to the first device list, the second device list and the third device list. Fig. 2C is a schematic diagram illustrating a travel log. As shown in Fig. 2C, it shows the travel log of the user on January 9. For example, the user went back to home at 02: 24, and left home at 12: 20, returned back to the office at 12, 50, and so on.

For the above point 2), a first location message can be acquired through a device carried by the user, and it can be detected whether the first location message matches the second location message of the target place. Wherein, the device carried by the user can be a terminal, a wearable device and the like. In the present embodiment, the device carried by the user is a wearable device, for example.

Optionally, the location message can be a geographic position message, or an Internet Protocol (IP) address and other message indicating a geographic position message. Then, detecting whether the user is located in the target place based on the first location message and the second location message, includes:
1) when the first location message is a geographic position message of the wearable device and the second location message is a geographic position message of the target place, detecting whether a distance between the wearable device and the target place is less than a preset threshold;
2) when the first location message is an IP address of the wearable device and the second location message is an address of a network segment corresponding to the target place, detecting whether the IP address of the wearable device is contained in the address of the network segment.

For the above point 1), when the first location message is a geographic position message, the wearable device can acquire the geographic position message through a positioning system, and send the geographic position message to the server. The server retrieves a pre-stored geographic position message corresponding to the target place, and detects whether a distance between the wearable device and the target place is less than a preset threshold. If the distance between the wearable device and the target place is less than the preset threshold, it determines that the user is located in the target place. If the distance between the wearable device and the target place is larger than the preset threshold, it determines that the user is not located in the target place. Wherein the preset threshold can be be set in default, by the user or by the server, such as 10m, 100m, and so on.

For the above point 2), when the first location message is an IP address, since the second network covering the target place is generally corresponding to a network segment, the server can detect whether the IP address is contained in the address of the network segment. If the IP address is contained in the address of the network segment, it can determine that the wearable device is connected in the second network and further determined that the user is located in the target place. If the IP address is not contained in the address of the network segment, it can determine that the wearable device is not connected in the second network and further determined that the user is not located in the target place.

When it is determined that the user is not located in the target place through the above methods, it is proceeded to step 202; when it is determined that the user is located in the target place through the above methods, the current process is finished, waiting for the start of another process of the method for sending a message.

In step 202, if the user is not located in the target place, state messages sent from all of door-window opening sensors of the target place are received, each of the door-window opening sensors corresponding to one door or one window.

When the user is not located in the target place, criminals might break into the target place through the opened door or window. Accordingly, the server is to acquire the states of the doors and the windows in the target place. Wherein, the doors and the windows mean at least one of the doors and the windows.

In the present embodiment, the user can mount a door-window opening sensor on each of the doors and the windows in advance, for acquiring the opening state of the door or the window and generating a state message which indicates the door or the window is opened or indicates that the door or the window is closed. Wherein, the door-window opening sensor can be at least one of a magnetic sensor, a pressure sensor, a proximity switch sensor, a displacement sensor or a sensor of other type which can detect the opening state of the door or the window.

In one possible implementation, after it determines that the user is not located in the target place, the server sends a state acquiring instruction to each door-window opening sensor, for the door-window opening sensor to acquire a state of the door or the window, generate a state message and send the same to the server.

In step 203, it is detected whether one of the state messages indicates an opened state.

The server can search for a state message indicating an opened state among all of the received state messages. If it searches out a state message indicating an opened state, step 204 is to be performed, and if it does not search out a state message indicating an opened state, it can be determined that all of the doors and the windows in the target place are closed, and the current process is finished, waiting for the start of another process of the method for sending a message.

In step 204, if one of the state messages indicates an opened state, it is determined that a door or a window of the target place is opened.

In step 205, if a door or a window of the target place is opened, a prompt message is sent to a device carried by the user.

The server can generate a prompt message, and send the same to the device carried by the user. For example, the server can firstly send the prompt message to the terminal of the user, and if the terminal dose not receive an operation to handle this, then the server can send the prompt message to the wearable device.

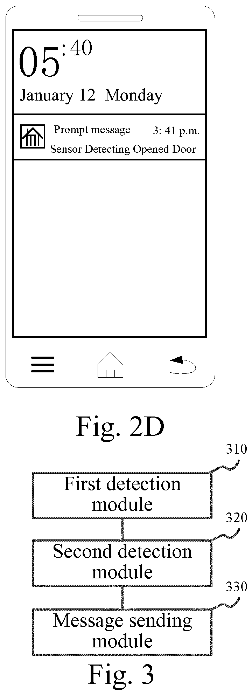

Wherein, the prompt message can be a text message, a picture message or a multimedia message. In the present embodiment, the prompt message is a text message for example. Fig. 2D is a schematic diagram illustrating a prompting message. As shown in the drawing, the prompt message is: Sensor Detecting Opened Door. After it receives the prompt message, the terminal can present the prompt message to the user.

Optionally, the server can also determine a position of the door or the window which is opened based on the door-window opening sensors. For example, the server receives a state message indicating an opened state which is sent from a door-window opening sensor in a bedroom, and it can determine that the window of the bedroom is opened and generate a prompt message of "Sensor Detecting Window of Bedroom Opened".

Optionally, the server can set in advance a corresponding relationship between the device carried by the user, the devices in the target place, the second device list and the door-window opening sensors in the target place.

Optionally, the above method can be performed in the server, or can also be performed in other device adapted for sending a prompt message.

Optionally, the above method can be triggered by an event, or can also be performed periodically, that is, periodically detecting whether the user is located in the target place and then performing the subsequent steps. The period for performing the above method can be set in default, by the user or by the server, such as 1 minute, 5 minutes and so on.

Accordingly, in the method for sending a message provided by the present disclosure, it is detected whether a user is located in a target place; if the user is not located in the target place, it is detected whether a door or a window of the target place is opened; and if a door or a window of the target place is opened, a prompt message is sent to a device carried by the user. Thereby, it can detect whether the user is located in the target place directly rather than detect based on the leaving time period. Thus, it can solve the problem that the user might leave the residence during a time other than the leaving time period and cause inaccuracy in prompting. Therefore, it can achieve an effect of accurate prompting.

In addition, when the second message is a first device list and the pre-stored message is a second device list, it is detected whether the user is located in the target place based on similarity between the first device list and the second device list. Thereby, it can determine whether the user is located in the target place based on the devices connected in the network, thus improving the accuracy in detection.

Fig. 3 is a block diagram of a device for sending a message according to an exemplary embodiment, which is applied in a server. As shown in Fig. 3, the device for sending a message includes: a first detection module 310, a first detection module 320 and a message sending module 330.

The first detection module 310 is configured to detect whether a user is located in a target place;
the second detection module 320 is configured to, if the first detection module 310 detects that the user is not located in the target place, detect whether a door or a window of the target place is opened; and
the message sending module 330 is configured to, if the second detection module 320 detects that a door or a window of the target place is opened, send a prompt message to a device carried by the user.

Accordingly, in the device for sending a message provided by the present disclosure, it is detected whether a user is located in a target place; if the user is not located in the target place, it is detected whether a door or a window of the target place is opened; and if a door or a window of the target place is opened, a prompt message is sent to a device carried by the user. Thereby, it can detect whether the user is located in the target place directly rather than detect based on the leaving time period. Thus, it can solve the problem that the user might leave the residence during a time other than the leaving time period and cause inaccuracy in prompting. Therefore, it can achieve an effect of accurate prompting.

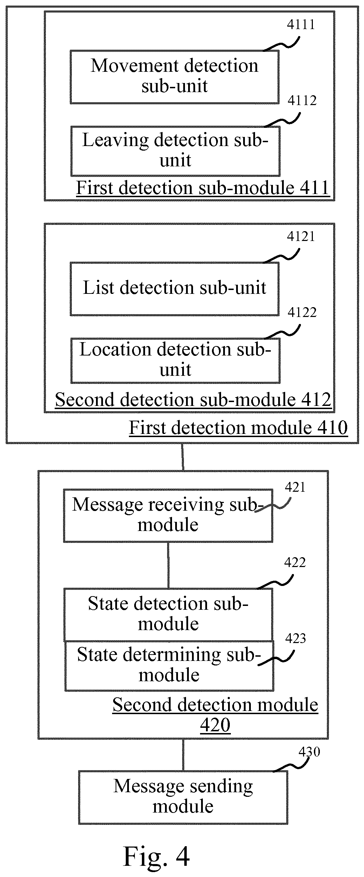

Fig. 4 is a block diagram of a device for sending a message according to an exemplary embodiment, which is applied in a server. As shown in Fig. 4, the device for sending a message includes: a first detection module 410, a second detection module 420 and a message sending module 430.

The first detection module 410 is configured to detect whether a user is located in a target place;

the second detection module 420 is configured to, if the first detection module 410 detects that the user is not located in the target place, detect whether a door or a window of the target place is open; and
the message sending module 430 is configured to, if the second detection module 420 detects that a door or a window of the target place is open, send a prompt message to a device carried by the user.

Optionally, the first detection module 410 includes: a first detection sub-module 411 or a second detection sub-module 412.

The first detection sub-module 411 is configured to receive a first message sent from a device in the target place, and detect whether the user is located in the target place based on the first message;

the second detection sub-module 412 is configured to receive a second message sent from the device carried by the user, and detect whether the user is located in the target place based on the second message and a pre-stored message corresponding to the target place, the second message indicating a location of the user and the pre-stored message indicating a location of the target place.

Optionally, the first detection sub-module includes: a movement detection sub-unit 4111 or a leaving detection sub-unit 4112.

The movement detection sub-unit 4111 is configured to, when the first message is a person-movement-indicating message, detect whether a person is moving in the target place during a preset time period based on the person-movement-indicating message; and

the leaving detection sub-unit 4112 is configured to, when the first message is a monitoring message obtained from monitoring of the target place, detect whether the user has left the target place based on the monitoring message.

Optionally, the second detection sub-module 412 includes: a list detection sub-unit 4121 or a location detection sub-unit 4122.

The list detection sub-unit 4121 is configured to, when the second message is a first device list and the pre-stored message is a second device list, detect whether the user is located in the target place based on similarity between the first device list and the second device list, the first device list being a list of devices which are connected in a first network covering a place where the user is currently located, and the second device list being a list of devices which are connected in a second network converting the target place; and
the location detection sub-unit 4122 is configured to, when the second message is a first location message of a wearable device of the user and the pre-stored message is a second location message of the target place, detect whether the user is located in the target place based on the first location message and the second location message.

Optionally, the location detection sub-unit 4122 is further configured to:
when the first location message is a geographic position message of the wearable device and the second location message is a geographic position message of the target place, detect whether a distance between the wearable device and the target place is less than a preset threshold; or
when the first location message is an Internet Protocol IP address of the wearable device and the second location message is an address of a network segment corresponding to the target place, detect whether the IP address of the wearable device is contained in the address of the network segment.

Optionally, the second detection module 420 includes: a message receiving sub-module 421, a state detection sub-module 422 and a state determining sub-module 423.

The message receiving sub-module 421 is configured to receive state messages sent from all of door-window open sensors of the target place, each of the door-window open sensors corresponding to one door or one window;
the state detection sub-module 422 is configured to detect whether one of the state messages indicates an open state; and
the state determining sub-module 423 is configured to, if the state detection sub-module detects that one of the state messages indicates an open state, determine that a door or a window of the target place is open.

Accordingly, in the device for sending a message provided by the present disclosure, it is detected whether a user is located in a target place; if the user is not located in the target place, it is detected whether a door or a window of the target place is open; and if a door or a window of the target place is open, a prompt message is sent to a device carried by the user. Thereby, it can detect whether the user is located in the target place directly rather than detect based on the leaving time period. Thus, it can solve the problem that the user might leave the residence during a time other than the leaving time period and cause inaccuracy in prompting. Therefore, it can achieve an effect of accurate prompting.

In addition, when the second message is a first device list and the pre-stored message is a second device list, it is detected whether the user is located in the target place based on similarity between the first device list and the second device list. Thereby, it can determine whether the user is located in the target place based on the devices connected in the network, thus improving the accuracy in detection.

With respect to the devices in the above embodiments, the specific manners for performing operations for individual modules therein have been described in detail in the embodiments regarding the relevant methods, which will not be elaborated herein.

An exemplary embodiment of the present disclosure provides a device for sending a message, which can implement the method for sending a message provided by the present disclosure. The device for sending a message includes: a processor; and a memory for storing instructions executable by the processor;
wherein the processor is configured to perform:
detecting whether a user is located in a target place;
if the user is not located in the target place, detecting whether a door or a window of the target place is open; and

if a door or a window of the target place is open, sending a prompt message to a device carried by the user.

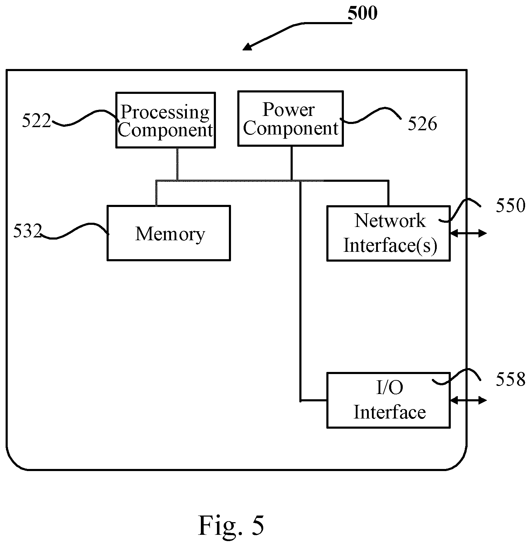

Fig. 5 is a block diagram of a device 500 for sending a message according to an exemplary embodiment. For example, the device 500 may be provided as a server. Referring to Fig. 5, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above described method for sending a message.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows Server^{™}, Mac OS X^{™}, Unix^{™}, Linux^{™}, FreeBSD^{™}, or the like.

## Claims

1. A method for sending a message, wherein the method comprises:
detecting (101, 201) whether a user is located in a target place;
if the user is not located in the target place, detecting (102) whether a door or a window of the target place is open; and
if a door or a window of the target place is open, sending (103, 205) a prompt message to a device carried by the user , wherein detecting whether a user is located in a target place comprises:
receiving a second message sent from the device carried by the user, and detecting whether the user is located in the target place based on the second message and a pre-stored message corresponding to the target place, the second message indicating a location of the user and the pre-stored message indicating a location of the target place, **characterised in that** the method further comprises:
detecting whether the user is located in the target place based on the second message and a pre-stored message corresponding to the target place, wherein
the second message is a first device list and the pre-stored message is a second device list, detecting whether the user is located in the target place based on similarity between the first device list and the second device list, the first device list being a list of devices which are connected in a first network covering a place where the user is currently located, and the second device list being a list of devices which are connected in a second network covering the target place.

2. The method of claim 1, wherein detecting whether a door or a window of the target place is opened comprises:
receiving (202) state messages sent from all door-window open sensors of the target place, each of the door-window open sensors corresponding to one door or one window;
detecting (205) whether one of the state messages indicates an open state; and
if one of the state messages indicates an open state, determining (204) that a door or a window of the target place is open.

3. A device for sending a message, wherein the device comprises:
a first detection module (310, 410) configured to detect whether a user is located in a target place;
a second detection module (320, 420) configured to, if the first detection module detects that the user is not located in the target place, detect whether a door or a window of the target place is open; and
a message sending module (330, 430) configured to, if the second detection module detects that a door or a window of the target place is open, send a prompt message to a device carried by the user, wherein the first detection module (410) comprises:
a detection sub-module (412) configured to receive a second message sent from the device carried by the user, and detect whether the user is located in the target place based on the second message and a pre-stored message corresponding to the target place, the second message indicating a location of the user and the pre-stored message indicating a location of the target place, **characterised in that** the second message is a first device list and the pre-stored message is a second device list, wherein the detection sub-module (412) comprises:
a list detection sub-unit (4121) configured to detect whether the user is located in the target place based on similarity between the first device list and the second device list, the first device list being a list of devices which are connected in a first network covering a place where the user is currently located, and the second device list being a list of devices which are connected in a second network covering the target place.

4. The device of claim 3, wherein the second detection module (420) comprises:
a message receiving sub-module (421) configured to receive state messages sent from all door-window open sensors of the target place, each of the door-window open sensors corresponding to one door or one window;
a state detection sub-module (422) configured to detect whether one of the state messages indicates an open state; and
a state determining sub-module (423) configured to, if the state detection sub-module detects that one of the state messages indicates an open state, determine that a door or a window of the target place is open.

5. A computer program, which when being executed on a processor, performs the method of claim 1 or claim 2.

## Patentansprüche

1. Verfahren zum Senden einer Nachricht, wobei das Verfahren Folgendes aufweist:
Erkennen (101, 201), ob ein Benutzer sich an einem Zielort befindet;
wenn der Benutzer sich nicht an dem Zielort befindet, Erkennen (102), ob eine Tür oder ein Fenster des Zielorts offen ist; und
wenn eine Tür oder ein Fenster des Zielorts offen ist, Senden (103, 205) einer Aufforderungsnachricht an eine Vorrichtung, die von dem Benutzer getragen wird, wobei das Erkennen, ob ein Benutzer sich an einem Zielort befindet, Folgendes aufweist:
Empfangen einer zweiten, von der Vorrichtung, die von dem Benutzer getragen wird, gesendeten Nachricht und Erkennen auf Basis der zweiten Nachricht und einer vorgespeicherten Nachricht, die dem Zielort entspricht, ob der Benutzer sich an dem Zielort befindet, wobei die zweite Nachricht eine Position des Benutzers anzeigt und die vorgespeicherte Nachricht eine Position des Zielorts anzeigt, **dadurch gekennzeichnet, dass** das Verfahren ferner Folgendes aufweist:
Erkennen auf Basis der zweiten Nachricht und einer vorgespeicherten Nachricht, die dem Zielort entspricht, ob der Benutzer sich an dem Zielort befindet, wobei
die zweite Nachricht eine erste Vorrichtungsliste ist und die vorgespeicherte Nachricht eine zweite Vorrichtungsliste ist, Erkennen auf Basis der Ähnlichkeit zwischen der ersten Vorrichtungsliste und der zweiten Vorrichtungsliste, ob der Benutzer sich an dem Zielort befindet, wobei die erste Vorrichtungsliste eine Liste von Vorrichtungen ist, die in einem ersten Netzwerk verbunden sind, das einen Ort abdeckt, wo sich der Benutzer aktuell befindet, und die zweite Vorrichtungsliste eine Liste von Vorrichtungen ist, die in einem zweiten Netzwerk verbunden sind, das den Zielort abdeckt.

2. Verfahren nach Anspruch 1, wobei das Erkennen, ob eine Tür oder ein Fenster des Zielorts offen ist, Folgendes aufweist:
Empfangen (202) von von allen Tür/Fenster-offen-Sensoren des Zielorts gesendeten Zustandsnachrichten, wobei jeder der Tür/Fenster-offen-Sensoren einer Tür oder einem Fenster entspricht;
Erkennen (205), ob eine der Zustandsnachrichten einen offenen Zustand anzeigt; und,
wenn eine der Zustandsnachrichten einen offenen Zustand anzeigt, Bestimmen (204), dass eine Tür oder ein Fenster des Zielorts offen ist.

3. Vorrichtung zum Senden einer Nachricht, wobei die Vorrichtung Folgendes aufweist:
ein erstes Erkennungsmodul (310, 410), das konfiguriert ist zum Erkennen, ob ein Benutzer sich an einem Zielort befindet;
ein zweites Erkennungsmodul (320, 420), das konfiguriert ist zum Erkennen, ob eine Tür oder ein Fenster des Zielorts offen ist, wenn das erste Erkennungsmodul erkennt, dass sich der Benutzer nicht an dem Zielort befindet; und
ein Nachrichtensendemodul (330, 430), das konfiguriert ist zum Senden einer Aufforderungsnachricht an eine Vorrichtung, die von dem Benutzer getragen wird, wenn das zweite Erkennungsmodul erkennt, dass eine Tür oder ein Fenster des Zielorts offen ist, wobei das erste Erkennungsmodul (410) Folgendes aufweist:
ein Erkennungsuntermodul (412), das konfiguriert ist zum Empfangen einer von der Vorrichtung, die von dem Benutzer getragen wird, gesendeten zweiten Nachricht und zum Erkennen auf Basis der zweiten Nachricht und einer vorgespeicherten Nachricht, die dem Zielort entspricht, ob der Benutzer sich an dem Zielort befindet, wobei die zweite Nachricht eine Position des Benutzers anzeigt und die vorgespeicherte Nachricht eine Position des Zielorts anzeigt, **dadurch gekennzeichnet, dass** die zweite Nachricht eine erste Vorrichtungsliste ist und die vorgespeicherte Nachricht eine zweite Vorrichtungsliste ist, wobei das Erkennungsuntermodul (412) Folgendes aufweist:
eine Listenerkennungsuntereinheit (4121), die konfiguriert ist zum Erkennen auf Basis der Ähnlichkeit zwischen der ersten Vorrichtungsliste und der zweiten Vorrichtungsliste, ob der Benutzer sich an dem Zielort befindet, wobei die erste Vorrichtungsliste eine Liste von Vorrichtungen ist, die in einem ersten Netzwerk verbunden sind, das einen Ort abdeckt, wo sich der Benutzer aktuell befindet, und die zweite Vorrichtungsliste eine Liste von Vorrichtungen ist, die in einem zweiten Netzwerk verbunden sind, das den Zielort abdeckt.

4. Vorrichtung nach Anspruch 3, wobei das zweite Erkennungsmodul (420) Folgendes aufweist:
ein Nachrichten empfangendes Untermodul (421), das konfiguriert ist zum Empfangen von von allen Tür/Fensteroffen-Sensoren des Zielorts gesendeten Zustandsnachrichten, wobei jeder der Tür/Fenster-offen-Sensoren einer Tür oder einem Fenster entspricht;
ein Zustandserkennungsuntermodul (422), das konfiguriert ist zum Erkennen, ob eine der Zustandsnachrichten einen offenen Zustand anzeigt; und
ein Zustandsbestimmungsuntermodul (423), das konfiguriert ist zum Bestimmen, dass eine Tür oder ein Fenster des Zielorts offen ist, wenn das Zustandsbestimmungsuntermodul erkennt, dass eine der Zustandsnachrichten einen offenen Zustand anzeigt.

5. Computerprogramm, das bei Ausführung in einem Prozessor das Verfahren nach Anspruch 1 oder Anspruch 2 durchführt.

## Revendications

1. Procédé d'envoi d'un message, le procédé comprenant :
la détection (101, 201) qu'un utilisateur se trouve ou non à un emplacement cible ;
si l'utilisateur ne se trouve pas à l'emplacement cible, la détection (102) qu'une porte ou une fenêtre de l'emplacement cible est ouverte ou non ; et
si une porte ou une fenêtre de l'emplacement cible est ouverte, l'envoi (103, 205) d'un message d'invite à un dispositif porté par l'utilisateur, dans lequel la détection qu'un utilisateur se trouve ou non à un emplacement cible comprend :
la réception d'un second message envoyé par le dispositif porté par l'utilisateur, et la détection que l'utilisateur se trouve ou non à l'emplacement cible en fonction du second message et d'un message prémémorisé correspondant à l'emplacement cible, le second message indiquant une position de l'utilisateur et le message mémorisé indiquant une position de l'emplacement cible, **caractérisé en ce que** le procédé comprend en outre :
la détection que l'utilisateur se trouve ou non à l'emplacement cible en fonction du second message et d'un message prémémorisé correspondant à l'emplacement cible, dans lequel le second message est une première liste de dispositifs et le message prémémorisé est une seconde liste de dispositifs, la détection que l'utilisateur se trouve ou non à l'emplacement cible en fonction d'une similarité entre la première liste de dispositifs et la seconde liste de dispositifs, la première liste de dispositifs étant une liste de dispositifs qui sont connectés dans un premier réseau couvrant un emplacement où se trouve actuellement l'utilisateur, et la seconde liste de dispositifs étant une liste de dispositifs qui sont connectés dans un second réseau couvrant l'emplacement cible.

2. Procédé selon la revendication 1, dans lequel la détection qu'une porte ou fenêtre de l'emplacement cible est ouverte ou non comprend :
la réception (202) de messages d'état envoyés par tous les capteurs de portes-fenêtres ouvertes de l'emplacement cible, chacun des capteurs de portes-fenêtres ouvertes correspondant à une porte ou une fenêtre ;
la détection (205) que l'un des messages d'état indique ou non un état ouvert ; et
si l'un des messages d'état indique un état ouvert, la détermination (204) qu'une porte ou une fenêtre de l'emplacement cible est ouverte.

3. Dispositif d'envoi d'un message, le dispositif comprenant :
un premier module de détection (310, 410) configuré pour détecter qu'un utilisateur se trouve ou non à un emplacement cible ;
un second module de détection (320, 420) configuré pour, si le premier module de détection détecte que l'utilisateur ne se trouve pas à l'emplacement cible, détecter qu'une porte ou une fenêtre de l'emplacement cible est ouverte ou non ; et
un module d'envoi de message (330, 430) configuré pour, si le second module de détection détecte qu'une porte ou une fenêtre de l'emplacement cible est ouverte, envoyer un message d'invite à un dispositif porté par l'utilisateur, dans lequel le premier module de détection (410) comprend :
un sous-module de détection (412) configuré pour recevoir un second message envoyé par le dispositif porté par l'utilisateur, et détecter que l'utilisateur se trouve ou non à l'emplacement cible en fonction du second message et d'un message prémémorisé correspondant à l'emplacement cible, le second message indiquant une position de l'utilisateur et le message mémorisé indiquant une position de l'emplacement cible, **caractérisé en ce que** le second message est une première liste de dispositifs et le message prémémorisé est une seconde liste de dispositifs, dans lequel le sous-module de détection (412) comprend :
une sous-unité de détection de liste (4121) configurée pour détecter que l'utilisateur se trouve ou non à l'emplacement cible en fonction d'une similarité entre la première liste de dispositifs et la seconde liste de dispositifs, la première liste de dispositifs étant une liste de dispositifs qui sont connectés dans un premier réseau couvrant un emplacement où se trouve actuellement l'utilisateur, et la seconde liste de dispositifs étant une liste de dispositifs qui sont connectés dans un second réseau couvrant l'emplacement cible.

4. Dispositif selon la revendication 3, dans lequel le second module de détection (420) comprend :
un sous-module de réception de messages (421) configuré pour recevoir des messages d'état envoyés par tous les capteurs de portes-fenêtres ouvertes de l'emplacement cible, chacun des capteurs de portes-fenêtres ouvertes correspondant à une porte ou une fenêtre ;
un sous-module de détection d'état (422) configuré pour détecter que l'un des messages d'état indique ou non un état ouvert ; et
un sous-module de détermination d'état (423) configuré pour, si le sous-module de détection d'état détecte que l'un des messages d'état indique un état ouvert, déterminer qu'une porte ou une fenêtre de l'emplacement cible est ouverte.

5. Programme informatique qui, à son exécution sur un processeur, exécute le procédé selon la revendication 1 ou la revendication 2.
